# FASCICULE DE BREVET EUROPEEN

(11) **EP 3 784 996 B1**
(45) Date de publication et mention de la délivrance du brevet: **07.08.2024**
(21) Numéro de dépôt: 19719271.9
(22) Date de dépôt: 23.04.2019
(51) Int. Cl.: G01H 1/00, G01N 29/07, G01N 29/11, H01M 10/48, H01M 10/42

(54) **PROCEDE DE DETECTION D'UNE ANOMALIE DE FONCTIONNEMENT D'UNE BATTERIE ET SYSTEME METTANT EN OUVRE LEDIT PROCEDE**
VERFAHREN ZUR ERKENNUNG EINER BETRIEBSANOMALIE EINER BATTERIE UND SYSTEM ZUR DURCHFÜHRUNG DES VERFAHRENS
METHOD FOR DETECTING AN OPERATING ANOMALY OF A BATTERY AND SYSTEM IMPLEMENTING SAID METHOD

(30) Priorité: 24.04.2018 FR 1853570
(43) Date de publication de la demande: 03.03.2021
(73) Titulaire: Commissariat à l'Energie Atomique et aux Energies Alternatives, 75015 Paris (FR)
(72) Inventeur: GUILLET, Nicolas, 38054 Grenoble Cedex 09 (FR)
(74) Mandataire: Cabinet Camus Lebkiri
(86) Numéro de dépôt international: PCT/EP2019/060301
(87) Numéro de publication internationale: WO 2019/206867

(56) Documents cités:
- WO-A1-2017/223219
- WO-A1-2018/107140
- DE-A1- 102015 210 266
- JP-A- 2005 291 832
- US-A1- 2013 335 094
- US-A1- 2017 331 160

## Description

### DOMAINE TECHNIQUE DE L'INVENTION

Le domaine technique de l'invention est celui du diagnostic non intrusif et en fonctionnement des systèmes électrochimiques de conversion de l'énergie (piles, batteries, piles à combustible). Elle concerne plus particulièrement un procédé utilisant des techniques de caractérisation ultrasonores afin d'identifier les paramètres optimaux de fonctionnement d'une batterie afin de pouvoir détecter une anomalie de fonctionnement de la batterie ainsi caractérisée et, éventuellement, apporter les corrections adéquates. L'invention concerne également un système mettant en oeuvre ledit procédé.

### ARRIERE-PLAN TECHNOLOGIQUE DE L'INVENTION

Les systèmes de gestion de batterie sont indispensables afin de satisfaire de la manière la plus efficace possible aux demandes des utilisateurs. De manière générale, les systèmes de gestion prennent en compte l'état de charge de la batterie, l'état de santé de la batterie et/ou l'état de sécurité de la batterie. Ces différentes informations sont généralement obtenues par la mesure de grandeurs électriques aux bornes de la batterie, mais également par des données externes telles que celles fournies par les techniques d'analyse thermique (mesure de température et/ou de flux de chaleur) ou de contrôle non destructif (caractérisation ultrasonore par exemple). Une fois ces paramètres déterminés, le système de gestion régule le fonctionnement de la batterie afin d'en optimiser les performances.

Les techniques d'analyse par signaux acoustiques ultrasonore récemment proposées pour l'étude des batteries en fonctionnement (Gold et al., 2017; Sood, Pecht, & Osterman, 2016; Steingart et al., 2016, DE102015210266A1) présentent cependant certains inconvénients. Tout d'abord, elles ne s'intéressent qu'à certains paramètres de la batterie et ne prennent pas en considération l'ensemble des informations contenues dans le signal acoustique mesuré. De plus, les signaux acoustiques utilisés prennent en général la forme de pulses de courte durée (inférieure à 0,1 ms) qui ne permettent pas l'établissement d'un régime stationnaire au sein de la batterie, limitant ainsi les outils mathématiques qu'il est possible d'utiliser afin d'analyser lesdits signaux.

Ensuite, les techniques utilisées ne prennent pas en compte les particularités de chaque batterie et ne permettent pas non plus de tenir compte de l'évolution des caractéristiques de la batterie au cours de sa vie. En effet, les principales caractéristiques utilisées pour la gestion du fonctionnement des batteries (valeurs de tension minimale et maximale de cellule, courant maximal, gamme de température de fonctionnement et de stockage...) sont généralement fournies par le constructeur. La plupart du temps, elles ne se présentent que sous la forme de lignes directrices générales sur les limites relatives à certaines caractéristiques électriques, sans pour autant tenir compte de l'évolution de ces limites au cours du vieillissement ou en fonction d'autres paramètres de fonctionnement tels que la température.

Le document JP 2005-291832 divulgue un procédé de détection d'une détérioration de l'état d'une batterie, correspondant par exemple à l'effondrement d'une électrode ou le décollement d'un matériau actif de la batterie, qui relie les temps de vol d'un signal ultrasonore à travers la batterie à la capacité de charge de la batterie. Quand la capacité de charge de la batterie est inférieure à un seuil prédéterminé, la batterie est détériorée.

On pourra également citer le document WO 2017/223219 A1 relatif à la surveillance de l'état de charge d'une batterie à l'aide d'ultrasons.

Il existe donc un besoin d'un procédé permettant de déterminer à tout instant les paramètres optimaux d'utilisation d'une batterie placée dans différentes conditions de fonctionnement et de tenir compte de l'évolution de la batterie au cours de sa vie afin de détecter une éventuelle anomalie dans le fonctionnement de la batterie.

### RESUME DE L'INVENTION

L'invention offre une solution aux problèmes évoqués précédemment en permettant de prendre en compte une pluralité de paramètres contenus dans les signaux acoustiques transmis par la batterie étudiée. A partir de l'analyse de ces signaux, il est ainsi possible de déterminer si la batterie est utilisée dans des conditions optimales pour garantir ses performances et sa durabilité, ou au contraire, si les conditions d'utilisation peuvent être préjudiciables à son bon fonctionnement. Il est également possible de déterminer si la batterie risque de présenter des risques pour la sécurité des biens et personnes environnantes. Cela permet un meilleur diagnostic de la batterie et donc de réaliser une correction des paramètres de fonctionnement de manière plus efficace et de maintenir la batterie dans les meilleures conditions de fonctionnement.

Un aspect de l'invention concerne un procédé de détection d'une anomalie dans le fonctionnement d'une batterie à l'aide d'un système de gestion de batterie, ledit système comprenant un émetteur acoustique configuré pour être fixé sur une paroi de la batterie, ledit émetteur acoustique étant fixé sur une paroi de la batterie lors de la mise en oeuvre du procédé, un récepteur acoustique configuré pour être fixé sur une paroi de la batterie, ledit récepteur acoustique étant fixé sur une paroi de la batterie lors de la mise en oeuvre du procédé, et un moyen de calcul connecté au récepteur acoustique, une cartographie définissant une première zone de fonctionnement dite zone de fonctionnement normal, une deuxième zone de fonctionnement dite zone de fonctionnement à risque et une troisième zone de fonctionnement dite zone de fonctionnement dangereux, ladite cartographie étant déterminée à partir des signaux acoustiques réceptionnés dans les différentes conditions d'opération de la batterie. Le procédé selon un premier aspect de l'invention comprend au moins un premier cycle de mesure, de préférence une pluralité de cycles de mesure, chaque cycle de mesure étant séparé du cycle de mesure précédent par une période dite période de mesure, chaque cycle de mesure comportant :
- une étape d'émission d'un signal acoustique par l'émetteur acoustique sur instruction du moyen de calcul ;
- une étape de réception d'un signal acoustique par le récepteur acoustique, le signal reçu étant transmis au moyen de calcul de sorte à obtenir un point de mesure dans la cartographie ;
- une étape de détermination de la zone de fonctionnement dans laquelle se situe le point de mesure ;
- lorsque le point de mesure se situe dans la zone fonctionnement à risque ou dans la zone de fonctionnement dangereux, une étape de détection d'une anomalie.

On entend par batterie tout système électrochimique de conversion et de stockage de l'énergie électrique (rechargeable ou non). Ainsi, il est permis, à l'aide d'au moins un cycle de mesure, d'identifier le régime de fonctionnement de la batterie et les éventuelles anomalies. En outre, l'étape d'émission d'un signal acoustique permet de générer une réponse de la batterie qui est ensuite réceptionnée lors de l'étape de réception. Il n'est donc pas nécessaire d'acquérir en permanence le signal acoustique émis par la batterie, cette acquisition étant déclenchée simultanément une émission et sur une durée définie en fonction de la durée du signal émis. On évite également les problèmes de filtrage du bruit rencontré lorsque le signal acoustique est reçu est simplement généré par le fonctionnement de la batterie elle-même. Par ailleurs, le signal émis lors de l'étape d'émission présente des propriétés précisément définies (intervalle de temps entre deux émissions, amplitude du signal, sa durée, distribution fréquentielle du signal), ce qui facilite l'analyse du signal reçu et permet une comparaison des mesures au cours du temps. De plus, l'utilisation de zones de fonctionnement permet de limiter la mémoire nécessaire à la mise en oeuvre du procédé comparativement aux techniques de l'art antérieur. En effet, dans les techniques de l'art antérieur, chaque mesure est comparée aux mesures d'une bibliothèque ce qui oblige à garder en mémoire le grand nombre de mesures qui constituent la bibliothèque en question. Dans le procédé selon un premier aspect de l'invention, seules des zones de fonctionnement sont utilisées, ce qui requiert beaucoup moins de mémoire. Par exemple, un point de référence peut être mémorisé ainsi que la distance correspondant à l'écart à la normalité qui est admise et qui vient ainsi définir la limite entre la zone de fonctionnement normal et la zone de fonctionnement risqué et la limite entre la zone de fonctionnement risqué et la zone de fonctionnement dangereux. De plus, il est plus rapide de localiser un point de mesure afin d'identifier dans laquelle de ces trois zones se situe ledit point de mesure que d'effectuer une comparaison avec d'autres points d'une bibliothèque comme cela est fait dans l'état de la technique. Il est important de noter qu'une caractéristique telle que l'état de charge ou l'état de santé ne peuvent pas à elles-seules servir à définir une zone telle que décrite par l'invention. En effet, un même état de charge peut correspondre à un fonctionnement dans une zone « normale », une zone « dangereuse » ou une « zone à risque » en fonction de la température, de la puissance électrique traversant la batterie ou de la tension de cellule par exemple. De telles situations se présentent notamment lors de test dit « abusifs » durant lesquels une batterie est en surcharge, en surchauffe ou en court-circuit.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Avantageusement, la durée du pulse est comprise entre 0,2 ms et 1 ms. Une telle durée du signal permet de réduire la densité de bruits extérieurs susceptible de se superposer au signal et ainsi masquer les signaux de courte durée. Elle permet également d'établir un régime stationnaire dans la batterie, ce qui est préférable lorsque les signaux acoustiques sont analysés à l'aide d'outils mathématiques tels que la transformée de Fourier. Cette durée permet également de réduire l'amplitude du signal émis par l'émetteur acoustique tout en garantissant le fait que l'énergie du signal transmis sera suffisamment élevée pour que ce dernier soit facilement détecté au niveau du récepteur acoustique. Enfin, cette durée permet de mettre en évidence les conséquences de certains phénomènes de transmission partielle et de réflexion des ondes au cours du transport des ondes acoustiques dans la matière et aux interfaces avec l'apparition de modulations périodiques du signal dues à la superposition de signaux de fréquences très proches (aussi appelé battements).

Avantageusement, la cartographie comprend un point de référence situé dans la zone de fonctionnement normal, chaque zone est associée à une vitesse limite, une vitesse étant positive lorsqu'elle s'éloigne du point de référence et négative lorsqu'elle se rapproche du point de référence et chaque cycle de mesure comprend :
- une étape de calcul de la vitesse du point de mesure dans la cartographie, cette vitesse étant égale à la distance entre le point de mesure obtenu lors du cycle de mesure précédent et le point de mesure courant (c'est-à-dire obtenu dans le cycle actuel) divisée par la période de mesure ;
- une étape de comparaison de la vitesse du point de mesure à la vitesse limite associée à la zone dans laquelle se situe le point de mesure ;
- lorsque la vitesse du point de mesure est supérieure à la vitesse limite associée à la zone dans laquelle se situe le deuxième point de mesure, le déclenchement de l'étape de détection d'une anomalie.

Ainsi il est possible d'anticiper une dégradation des conditions de fonctionnement de la batterie à travers une évolution jugée trop rapide de la vitesse du dernier point mesure. De plus, une action corrective peut être mise en place avant même l'entrée de la batterie dans une zone de fonctionnement dangereux ou à risque, contribuant à l'allongement de la durée de vie de la batterie.

Avantageusement, chaque cycle de mesure comprend, lorsqu'une anomalie est détectée, une étape de déclenchement d'une alerte. Ainsi l'utilisateur est prévenu en cas de fonctionnement anormal de la batterie.

Avantageusement, chaque cycle comprend, lorsqu'une anomalie est détectée ou lorsqu'une alerte est déclenchée, une étape de correction du régiment de fonctionnement de la batterie. Ainsi, en plus d'alerter l'utilisateur d'un dysfonctionnement, le système de gestion met en place des actions correctrices.

Avantageusement, lorsque l'étape de correction ne permet pas de rétablir un régime de fonctionnement normal de la batterie au bout d'un temps prédéterminé, une étape de passage en mode dégradé ou une étape d'arrêt du système.

Ainsi, lorsque les actions correctrices mises en place ne sont pas suffisantes, le système fait en sorte que limiter les dommages de la batterie en mettant cette dernière en mode dégradé ou à l'arrêt.

Avantageusement, une étape de réduction de la période de mesure est déclenchée par l'étape de déclenchement d'une alerte.

Ainsi, en réduisant la période de mesure, le procédé permet d'assurer un meilleur suivi de la batterie, le temps séparant deux cycles de mesure consécutifs du régime de fonctionnement de ladite batterie étant réduit.

Avantageusement, chaque point de mesure obtenu au cours de chaque cycle est stocké jusqu'à obtenir un nombre de points de mesure égal à une valeur seuil, dit seuil d'adaptation, la position du point de référence étant recalculée puis les points de mesure effacés lorsque ledit seuil est atteint.

Ainsi, la cartographie prend en compte les nouvelles mesures ce qui permet au système d'effectuer un autoapprentissage à partir desdites mesures.

Un deuxième aspect de l'invention concerne un système de gestion d'une batterie comprenant les moyens pour mettre en oeuvre un procédé selon un premier aspect de l'invention.

Un troisième aspect de l'invention concerne un programme d'ordinateur comprenant des instructions qui conduisent le système de gestion selon un deuxième aspect de l'invention à exécuter les étapes du procédé selon un premier aspect de l'invention.

Un quatrième aspect de l'invention concerne un support lisible par ordinateur, sur lequel est enregistré le programme d'ordinateur selon un troisième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système de gestion selon un deuxième aspect de l'invention.
- La figure 2 montre un ordinogramme d'un procédé selon un premier aspect de l'invention.
- La figure 3 monte différents motifs de signaux pouvant être utilisés dans un procédé selon un premier aspect de l'invention.
- La figure 4 montre une cartographie dans laquelle figurent trois zones correspondant à trois zones de fonctionnement différentes de la batterie utilisée dans un procédé selon un premier aspect de l'invention.

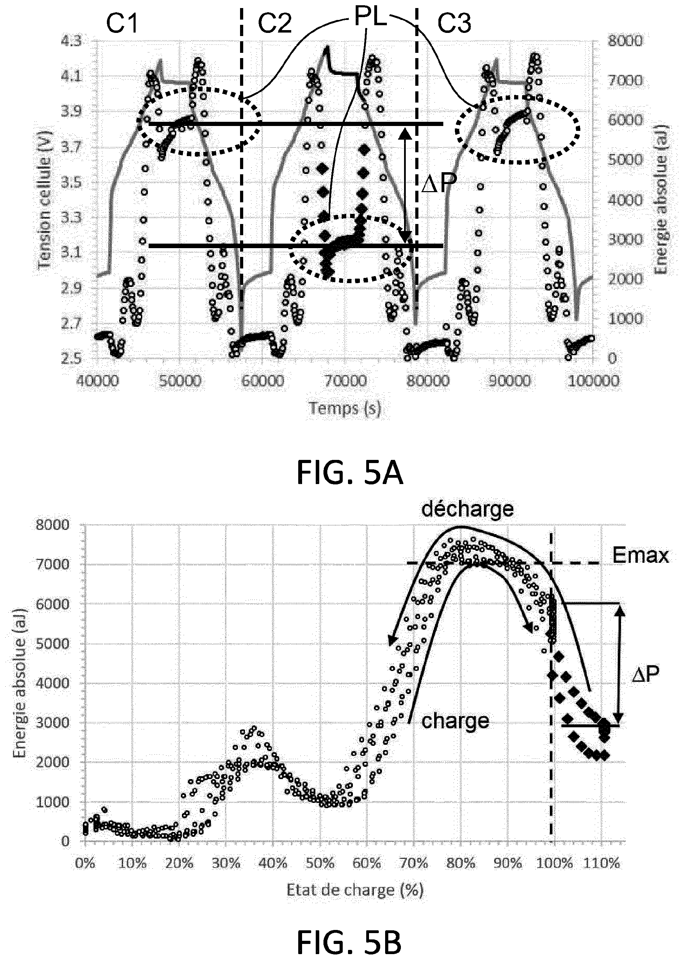

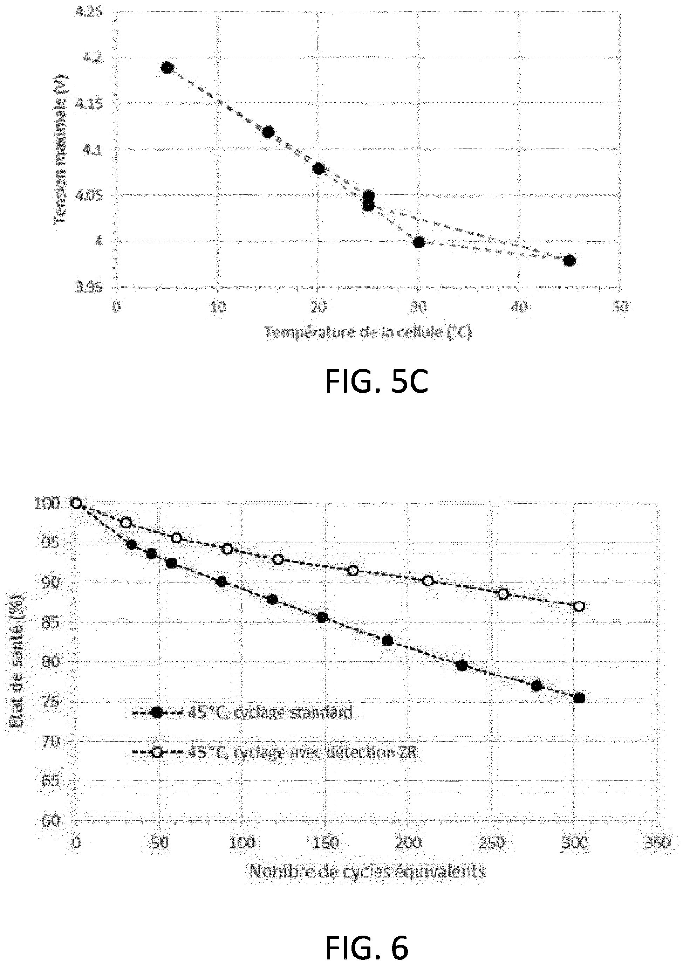

- Les figures 5A et 5C montrent, pour la figure 5A un exemple d'évolution de l'énergie absolue du signal émis dans un procédé selon un premier aspect de l'invention en fonction de l'état de charge, pour la figure 5B un exemple d'évolution de l'énergie absolue du signal réceptionné dans un procédé selon un premier aspect de l'invention en fonction de l'état de charge de la batterie, et pour la figure 5C l'évolution de la tension maximale recommandée aux bornes d'une batterie Lithium - ion de type NMC/G (électrode positive à base d'oxyde métallique composé de nickel, manganèse et cobalt, électrode négative à base de graphite) en fonction de la température.
- La figure 6 montre l'évolution de l'état de santé d'une batterie avec et sans mise en oeuvre d'un procédé selon un premier aspect de l'invention.
- Les figure 7A à 7C montrent, pour la figure 7A la tension aux bornes de la batterie au cours d'une pluralité de cycles charge/décharge effectués sur une batterie Lithium - ion de type LFP/G (électrode positive à base de phosphate de fer, électrode négative à base de graphite) pour différentes températures, pour la figure 7B l'évolution du temps de vol mesuré sur une batterie LFP/G pour différentes température en fonction du temps, et pour la figure 7C l'évolution du temps de vol mesuré en fonction de la température.
- Les figures 8A à 8D montrent l'analyse à travers différents paramètres de deux comportements thermiques différents d'une même batterie de type NMC/G.
- Les figures 9A à 9C illustrent la détermination des différentes zones de fonctionnement d'une même batterie de type NMC/G.

### DESCRIPTION DETAILLEE D'AU MOINS UN MODE DE REALISATION DE L'INVENTION

Sauf précision contraire, un même élément apparaissant sur des figures différentes présente une référence unique.

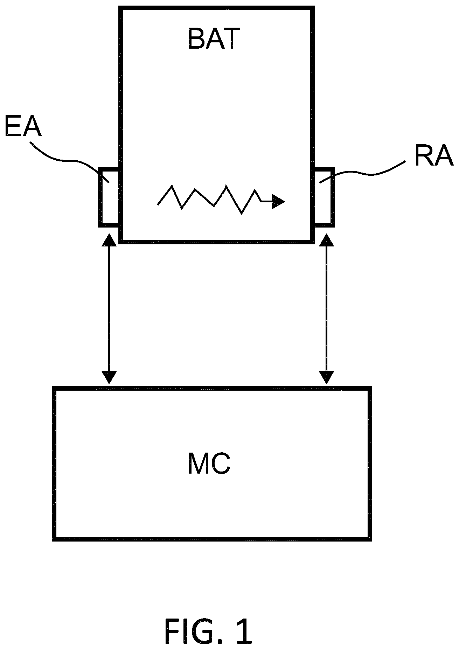

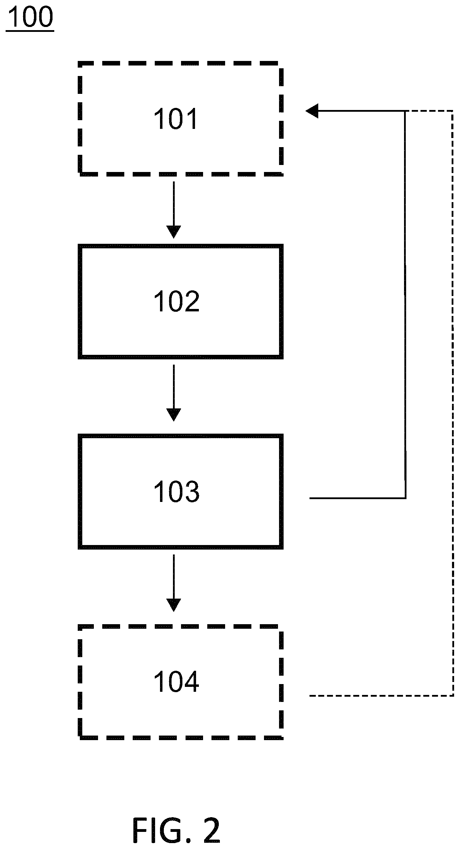

Un premier mode de réalisation d'un premier aspect de l'invention illustré aux figures 1 à 4 concerne un procédé 100 de détection d'une anomalie dans le fonctionnement d'une batterie BAT à l'aide d'un système de gestion de batterie BAT. Dans la suite, on entend par batterie BAT tout système électrochimique de conversion et de stockage de l'énergie électrique (rechargeable ou non). De préférence, le système de gestion de batterie BAT comprend des moyens pour contrôler et mesurer les grandeurs physiques de référence de la batterie BAT telles que le courant délivré par la batterie BAT ou la tension aux bornes de la batterie BAT. De plus, le système de gestion comprend un récepteur acoustique RA configuré pour être fixé sur une paroi de la batterie BAT (ledit récepteur acoustique étant fixé sur une paroi de la batterie lors de la mise en oeuvre du procédé selon un premier aspect de l'invention), et un moyen de calcul MC connecté au récepteur acoustique RA. Le récepteur acoustique RA est de préférence un récepteur acoustique RA piézoélectrique et ce dernier est fixé à une paroi de la batterie BAT au moyen d'une colle ou de tout autre moyen de fixation. Par exemple, le récepteur acoustique RA peut être à base de PVDF (Polymère Polyfluore de Vinylidène), dispositif qui présente généralement des bandes de fréquences de résonance larges comprises entre le kHz et le MHz. De manière alternative, le récepteur acoustique RA peut être à base de céramiques PZT (titano-zirconate de plomb), dispositif qui présente généralement des bandes de fréquences de résonance étroites comprises entre 10 kHz et quelques centaines de kHz. Le moyen de calcul MC peut prendre la forme d'un processeur associé à une mémoire, d'une carte ASIC ou bien encore un FPGA. La connexion du moyen de calcul MC avec le récepteur acoustique RA peut se faire au moyen d'un bus, d'une connexion de type Ethernet^{®}, ou bien encore au moyen d'une connexion sans fils, par exemple Bluetooth^{®}.

Le système de gestion comprend également, stockée dans une mémoire, une cartographie CG définissant une première zone de fonctionnement dite zone de fonctionnement normal ZN, une deuxième zone de fonctionnement dite zone de fonctionnement à risque ZR et une troisième zone de fonctionnement dite zone de fonctionnement dangereux ZD. Plus particulièrement, la zone de fonctionnement normal ZN correspond à un fonctionnement nominal de la batterie BAT, la zone de fonctionnement à risque ZR correspond à un fonctionnement à risque de la batterie BAT, c'est-à-dire des conditions de fonctionnement dans lesquelles la batterie BAT peut subir des dégradations irréversibles à court terme si elles sont maintenues au-delà d'une durée prédéterminée, et la zone de fonctionnement dangereux ZD correspond à un fonctionnement entrainant une dégradation irréversible immédiate de la batterie BAT. Cette cartographie CG peut être déterminée à partir d'une bibliothèque de signaux, chaque signal de la bibliothèque de signaux correspondant à un régime de fonctionnement donné de la batterie BAT. Par exemple, cette bibliothèque est réalisée par apprentissage. Pour cela la batterie BAT est placée dans différentes conditions de fonctionnement correspondant aux limites de fonctionnement admises (tension, courant, température). Puis, les caractéristiques, de préférence les caractéristiques principales, des signaux acoustiques réceptionnés dans les différentes conditions normales d'opération sont stockées dans la bibliothèque. De manière avantageuse, il est également possible de stocker l'évolution des caractéristiques des signaux en fonction de certains paramètres (par exemple, l'évolution des signaux en fonction de l'état de charge à plusieurs températures distinctes : température nominale, minimale, maximale de fonctionnement). La bibliothèque peut par exemple être fournie par le constructeur de batteries BAT. Les caractéristiques des signaux peuvent être issues de l'analyse temporelle des signaux (durée, énergie absolue, force du signal, vitesse de montée du signal, temps de vol, durée avant maximum d'amplitude ...) et/ou d'une analyse fréquentielle (fréquence maximale, fréquence moyenne, fréquence centroïde, densité spectrale de puissance...).

Dans un exemple de réalisation, les trois zones de fonctionnement sont obtenues à partir d'une bibliothèque telle que décrite précédemment. Pour cela, le barycentre de l'ensemble des points de la bibliothèque est calculé de sorte à obtenir un point de référence REF. Puis, pour chaque point de mesure, on calcule la distance séparant ledit point du point de référence REF de sorte à obtenir la distribution des distances. Il est ensuite possible d'identifier deux distances définissant deux limites et donc trois zones en fonction de cette distribution. Par exemple, dans un mode particulièrement avantageux, la bibliothèque ne contient que des mesures effectuées dans un régime de fonctionnement normal. Pour chaque paramètre pertinent, une distance correspondant environ 95 % des points de mesure (2σ : 2 fois l'écart type des écarts mesurés dans des conditions normales de fonctionnement) est déterminée de sorte à définir le rayon d'une sphère (le nombre de dimensions de cette sphère est égal à celui de l'espace dans lequel est effectuée la cartographie CG) dont le centre est le point de référence REF. Cette sphère définit alors la limite entre la zone de fonctionnement normal ZN et la zone de fonctionnement à risque ZR. Puis une distance correspondant à 4 fois l'écart type (4σ) et contenant statistiquement plus de 99.99% des points de mesure obtenus dans des conditions normales, est déterminée de sorte à définir le rayon d'une deuxième sphère dont le centre est le point de référence REF. Cette deuxième sphère définit alors la limite entre la zone de fonctionnement à risque ZR et la zone de fonctionnement dangereux ZD. Ce mode de réalisation est particulièrement avantageux dans la mesure où il permet de déterminer les trois zones en restant dans un régime de fonctionnement normal. En effet, dans ce mode de réalisation, on entend par zone de fonctionnement « normale » une zone dans laquelle la batterie est en fonctionnement (charge - décharge) ou au repos dans des conditions opératoires définies comme « normales » par le constructeur. C'est-à-dire qu'elle ne sort pas des domaines de température, de tension de cellule et de courant (ou de puissance) nominaux, généralement détaillés dans la fiche technique fournie par le fabriquant. En outre, les particularités physiques des ondes acoustiques réceptionnées à la suite de chaque émission sont comprises dans les limites définies au cours de l'étalonnage et du fonctionnement préalablement considéré comme « normal » (c'est-à-dire dans la limite des 2σ présentée ci-dessus). De même, dans ce mode de réalisation, on entend par zone de fonctionnement « à risque » une zone dans laquelle la batterie est toujours en fonctionnement (charge - décharge) ou au repos dans des conditions opératoires définies comme « normales » par le constructeur. C'est-à-dire qu'elle ne sort pas des domaines de température, de tension de cellule et de courant (ou de puissance) nominaux, généralement détaillés dans la fiche technique fournie par le fabriquant. Mais cette fois, les particularités physiques des ondes acoustiques réceptionnées à la suite de chaque émission sortent des limites définies au cours de l'étalonnage et du fonctionnement préalablement considéré comme «normal» (c'est-à-dire dans la limite des 4σ présentée ci-dessus). En outre, dans ce mode de réalisation, on entend par zone de fonctionnement « dangereuse » une zone dans laquelle la batterie est toujours en fonctionnement (charge - décharge) ou au repos dans des conditions opératoires définies comme « normale » par le constructeur. C'est-à-dire qu'elle ne sort pas des domaines de température, de tension de cellule et de courant (ou de puissance) nominaux, généralement détaillés dans la fiche technique fournie par le fabriquant. Mais cette fois, les particularités physiques des ondes acoustiques réceptionnées à la suite de chaque émission sortent des limites définies au cours de l'étalonnage et du fonctionnement préalablement considéré comme « à risque » (c'est-à-dire au-delà de la limite des 4σ présentée ci-dessus).

De préférence, seules les caractéristiques principales des signaux c'est-à-dire les caractéristiques les plus pertinentes à prendre en compte sont utilisées pour la génération de la cartographie CG. Cependant, ces caractéristiques dépendent fortement du système complet et la cartographie est donc spécifique audit système. Plus particulièrement, les informations nécessaires pour alimenter la bibliothèque dépendent fortement du système complet mis en place et en particulier des paramètres suivants :
- de l'émetteur acoustique EA (positionnement par rapport à la batterie, forme du signal gamme de fréquences, amplitude ...) ;
- des particularités de la batterie BAT (taille, forme, chimie, emballage) ;
- des particularités des éléments piézoélectriques utilisés pour l'enregistrement des signaux reçus (fréquence de résonnance, sensibilité, positionnement et qualité du couplage avec la batterie,... ).

Le procédé 100 selon un premier aspect de l'invention comprend au moins un premier cycle de mesure, de préférence une pluralité de cycles de mesure, chaque cycle de mesure étant séparé du cycle de mesure précédent (ou suivant) par une période dite période de mesure. Autrement dit, le suivi de la batterie BAT est assuré par la succession dans le temps de cycles de mesure. De préférence, cette période de mesure est constante. Cependant, cette dernière peut être amenée à évoluer, par exemple cette période peut être réduite si l'évolution du régime de fonctionnement de la batterie BAT laisse craindre un endommagement de cette dernière, de sorte à assurer un suivi plus fréquent.

Pour cela, chaque cycle de mesure comporte une étape 102 de réception d'un signal acoustique par le récepteur acoustique RA, le signal reçu étant transmis au moyen de calcul MC de sorte à obtenir un point de mesure dans la cartographie CG. Ce signal acoustique peut être produit par une source externe de signaux acoustiques (bruit) susceptible de générer des ondes acoustiques dans la gamme de fréquence souhaitée. Cette source externe peut être par exemple un processeur, un ventilateur ou une alimentation à découpage à base de transistors. Dans le cas de l'utilisation d'une source externe de signal acoustique, il est nécessaire de disposer d'au moins un récepteur acoustique RA mais il est préférable de disposer d'au moins deux récepteurs acoustiques RA. En effet, avec plusieurs récepteurs acoustiques RA, les mesures à considérer pour l'analyse pourront également comprendre des paramètres concernant les différences entre le signal émis et les signaux réceptionnés par chacun des récepteurs RA.

De préférence, l'émission du signal reçu est contrôlée. Pour cela, dans un mode de réalisation, le système de gestion comprend un émetteur acoustique EA configuré pour être fixé sur une paroi de la batterie BAT, ledit émetteur acoustique étant fixé sur une paroi de la batterie lors de la mise en oeuvre du procédé selon un premier aspect de l'invention, le moyen de calcul MC étant connecté à l'émetteur acoustique EA. L'émetteur acoustique EA est de préférence un émetteur acoustique EA piézoélectrique et ce dernier est fixé à une paroi de la batterie BAT au moyen d'une colle ou de tout autre moyen de fixation. Par exemple, l'émetteur acoustique EA peut être à base de PVDF (Polymère Polyfluore de Vinylidène), dispositif qui présente généralement des bandes de fréquences de résonance larges comprises entre le kHz et le MHz. De manière alternative, l'émetteur acoustique EA peut être à base de céramiques PZT (titano-zirconate de plomb), dispositif qui présente généralement des bandes de fréquences de résonance étroites comprises entre 10 kHz et quelques centaines de kHz. De préférence, la paroi sur laquelle est fixé l'émetteur acoustique EA et opposée à la paroi sur laquelle est fixé le récepteur acoustique RA. De plus, chaque cycle de mesure comprend, avant l'étape de 102 de réception du signal acoustique, une étape 101 d'émission d'un signal acoustique par l'émetteur acoustique EA sur instruction du moyen de calcul MC. Comme déjà mentionné, l'émission d'un signal acoustique contrôlé présente plusieurs avantages. Tout d'abord, il n'est pas nécessaire d'acquérir en permanence le signal acoustique émis par la batterie, cette acquisition ne se faisant que lorsqu'il y a émission. On évite également les problèmes de filtrage du bruit rencontré lorsque le signal acoustique est reçu est simplement généré par le fonctionnement de la batterie elle-même. Par ailleurs, le signal émis lors de l'étape d'émission à des propriétés bien connues, ce qui facilite l'analyse du signal reçu et permet une comparaison des mesures au cours du temps.

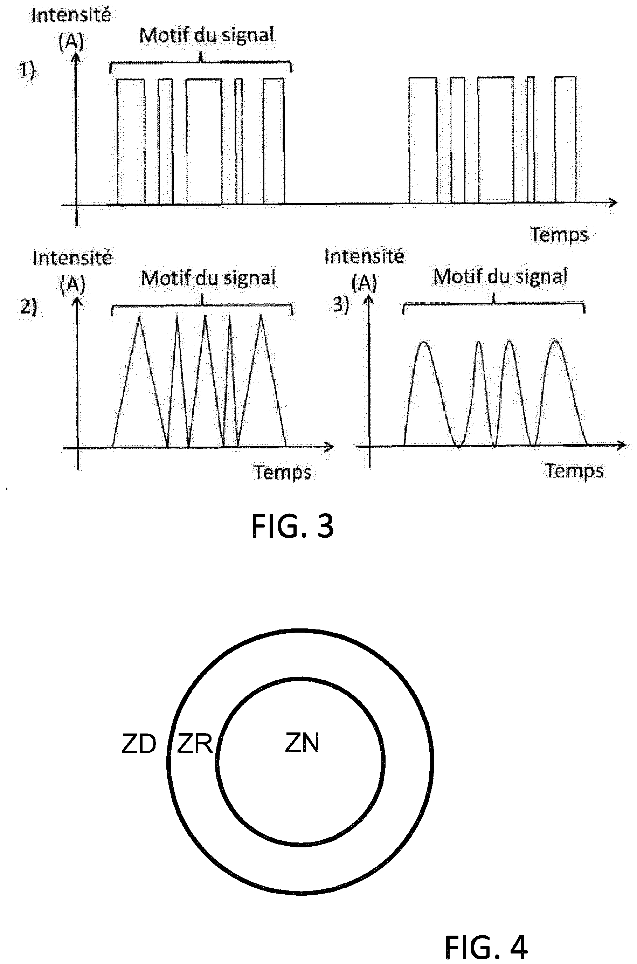

De préférence, le signal émis comporte une pluralité de fréquences comprises entre 1 kHz et 1 MHz, de préférence entre 100 kHz et 200 kHz. Il est ainsi possible d'exciter l'émetteur acoustique EA sur une partie ou la totalité de cette gamme de fréquences. Le signal peut notamment comporter plusieurs composantes fréquentielles successives (par exemple, plusieurs sinusoïdes de fréquences croissantes ou décroissantes successivement dans le temps) et/ou simultanées (excitation multi fréquentielles). Comme illustré à la figure 3, le motif du signal émis peut être un motif carré, un motif triangle, un motif sinusoïdal, une combinaison d'une partie au moins de ces motifs ou bien encore une forme quelconque. La forme, la fréquence et l'intensité des signaux peuvent être choisies de sorte à prendre en compte les spécificités de chaque type de batterie BAT, la nature de l'émetteur acoustique EA et/ou la nature du récepteur acoustique RA.

De préférence, la durée du signal acoustique émis est comprise entre 0,2 et 1 ms. Cette durée permet de réduire la densité de bruits extérieurs susceptible de se superposer au signal et ainsi masquer les signaux de courte durée. Elle permet également d'établir un régime stationnaire dans la batterie BAT, ce qui est préférable lorsque les signaux acoustiques sont analysés à l'aide d'outils mathématiques tels que la transformée de Fourier. Il est utile de souligner qu'un tel régime stationnaire ne peut pas être obtenu avec des pulses de courte durée (typiquement inférieure à 0,1 ms) tels qu'utilisés dans les procédés de l'état de la technique. Cette durée permet également de réduire l'amplitude du signal émis par l'émetteur acoustique EA tout en garantissant que l'énergie du signal soit suffisamment élevée pour que ce dernier soit facilement détecté au niveau du récepteur acoustique RA. La réduction de l'amplitude (comparativement à un signal acoustique de courte durée) permet de réduire les problèmes liés aux non-linéarités de la réponse de la batterie BAT, de l'émetteur acoustique EA et/ou du récepteur acoustique RA. A ce titre, il est intéressant de noter que les signaux acoustiques détectés par le récepteur acoustique RA sont convertis en signaux électriques afin de pouvoir être envoyés et traités par le moyen de calcul MC. Cette conversion n'est fiable que si les phénomènes non linéaires sont réduits au minimum, ce qui est rendu possible, dans la présente invention, par la durée des signaux acoustiques utilisés. De plus, les signaux réceptionnés par le récepteur acoustique RA sont obtenus à partir d'un système en régime stationnaire, condition nécessaire à l'exploitation desdits signaux par des techniques de traitement des données fréquentielles telles que la transformée de Fourier, là où les procédés de l'état de la technique se cantonnent aux seules techniques de traitement des données temporelles. Enfin, cette durée permet de mettre en évidence les conséquences de certains phénomènes (transmission partielle et réflexion des ondes au cours du transport des ondes acoustiques dans la matière et aux interfaces) liés au transport des ondes acoustiques dans la matière à travers l'apparition de modulations périodiques du signal dues à la superposition de signaux de fréquences très proches (aussi appelé battements). Or ce type de signal s'avère très riche en informations liées au transport des ondes acoustiques au travers des différents matériaux ainsi que les interfaces qui constituent la batterie BAT.

Chaque cycle de mesure comprend également une étape 103 de détermination de la zone de fonctionnement dans laquelle se situe le point de mesure. Comme expliqué auparavant, le moyen de calcul MC a en mémoire une cartographie CG comprenant trois zones. Une fois qu'un point de mesure est obtenu, il est possible de déterminer dans laquelle de ces trois zones de cette cartographie CG il se situe. De plus, chaque cycle de mesure comprend, lorsque le point de mesure se situe dans la zone fonctionnement à risque ZR ou dans la zone de fonctionnement dangereux ZD, une étape 104 de détection d'une anomalie.

Pour illustrer l'influence des conditions opératoires d'une batterie BAT sur le signal mesuré lors de la mise en oeuvre du procédé 100 selon un premier aspect de l'invention, différentes mesures expérimentales ont été réalisées et sont présentées dans les figures 5 à 8.

La figure 5A montre l'évolution de la force du signal en fonction du temps pour trois cycles C1, C2, C3 de charge - décharge successifs. Le premier cycle C1 de charge/décharge est un cycle pour lequel la charge est complète alors que le deuxième cycle C2 de charge/décharge est un cycle pour lequel la batterie est chargée à 110 % de sa capacité nominale. Le cycle C3 est de nouveau un cycle de charge - décharge identique à C1. Pour chaque cycle C1, C2, C3 de charge/décharge, deux pics de force maximale sont présents, entre lesquels se situe un plateau PL pour lequel la force du signal (ou énergie du signal) est sensiblement constante. On observe cependant que l'ordonnée de ce plateau en cas de surcharge est différente de l'ordonnée dudit plateau en cas de charge normale, cette différence étant matérialisé par ΔP sur la figure 5A. La figure 5B illustre quant à elle l'évolution de l'énergie absolue du signal réceptionné en fonction de l'état de charge de la batterie au cours de ces trois cycles C1, C2, C3 successifs de charge - décharge. Dans la bibliothèque de mesures, les mesures associées au premier plateau PL seraient donc associées à une charge normale de la batterie BAT alors les mesures associées au deuxième plateau PL serait associées à une surcharge. Les zones de fonctionnement seront alors tracées en conséquence de sorte que les points mesures correspondant au premier cycle C1 et au troisième cycle C3 se situent dans la zone de fonctionnement normal ZN alors que les points de mesures correspondant à la surcharge lors du deuxième cycle se situent dans la zone de fonctionnement à risque ZR voire dans la zone de fonctionnement dangereux ZD.

La figure 5C montre l'évolution de la tension maximale aux bornes de la batterie BAT avant d'atteindre la zone de fonctionnement à risque ZR en fonction de la température. Le passage dans la zone à risque ZR est observé un peu en-dessous de 4,2 V à 5 °C et la valeur de tension diminue lorsque la température augmente. Ainsi, à 25 °C, la tension maximale avant de passer dans la zone à risque ZR n'est plus que de 4,05 V. Elle ne sera plus que de 3.97 V pour une température de fonctionnement de 45 °C. Il est ainsi possible d'utiliser la détection du passage dans la zone de risque ZR pour déterminer la tension maximale de fonctionnement de la batterie BAT et améliorer la gestion de cette batterie BAT pour garantir une meilleure durabilité. Cela est notamment illustré à la figure 6 qui présente un exemple d'évolution de l'état de santé de deux batteries BAT testées avec un protocole de vieillissement accéléré. L'état de santé des deux batteries BAT diminue au cours du cyclage mais celle qui bénéficie de la gestion optimisée par la détection du passage dans la zone de risques ZR présente une dégradation de l'état de santé presque deux fois plus faible.

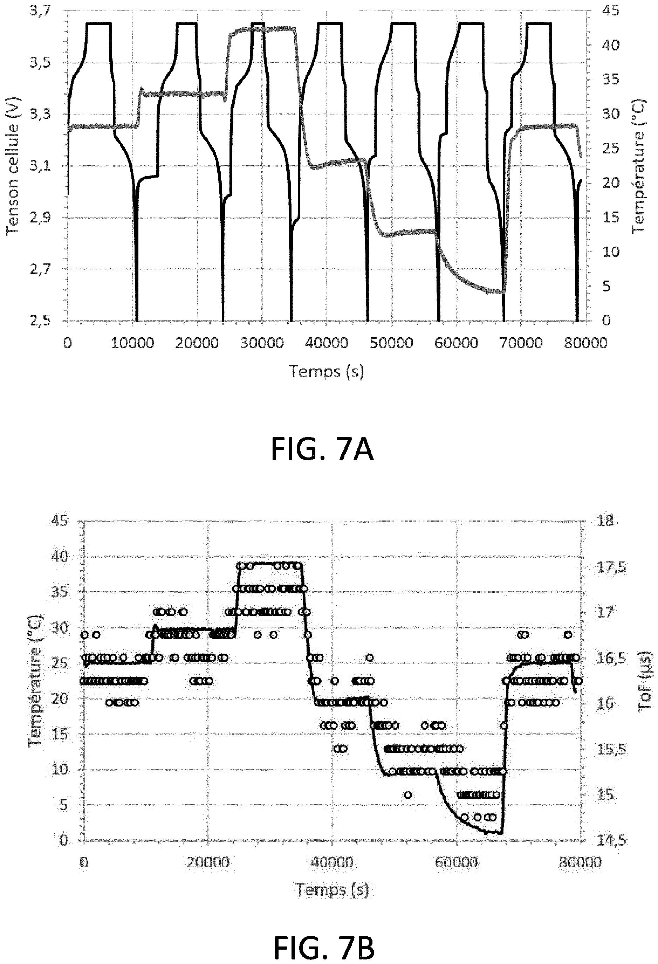

Un autre exemple de l'influence que peut avoir la température sur le régime de fonctionnement de la batterie est donné à la figure 7A, laquelle montre une pluralité de cycles charge/décharge effectués pour des températures différentes. Plus particulièrement, elle présente d'une part l'évolution de la tension aux bornes de la batterie BAT en fonction du temps (la courbe noire) ainsi que l'évolution de la température de ladite batterie BAT en fonction du temps (la courbe grise). Parmi les différents paramètres caractérisant les signaux acoustiques transmis, certains n'évoluent pas, ou très peu avec l'état de charge de la batterie, mais en revanche, évoluent de manière sensible avec la température. Dans l'exemple décrit (mesures de signaux acoustiques réalisées au cours de cycles charge - décharge d'une batterie cylindrique LFP/G pendant des variations de température), c'est le cas de la durée du signal reçu, du nombre de coups, ou, dans une moindre mesure, de la fréquence moyenne des signaux. C'est également le cas du temps de vol, c'est-à-dire le temps séparant l'émission du signal émis de sa réception.

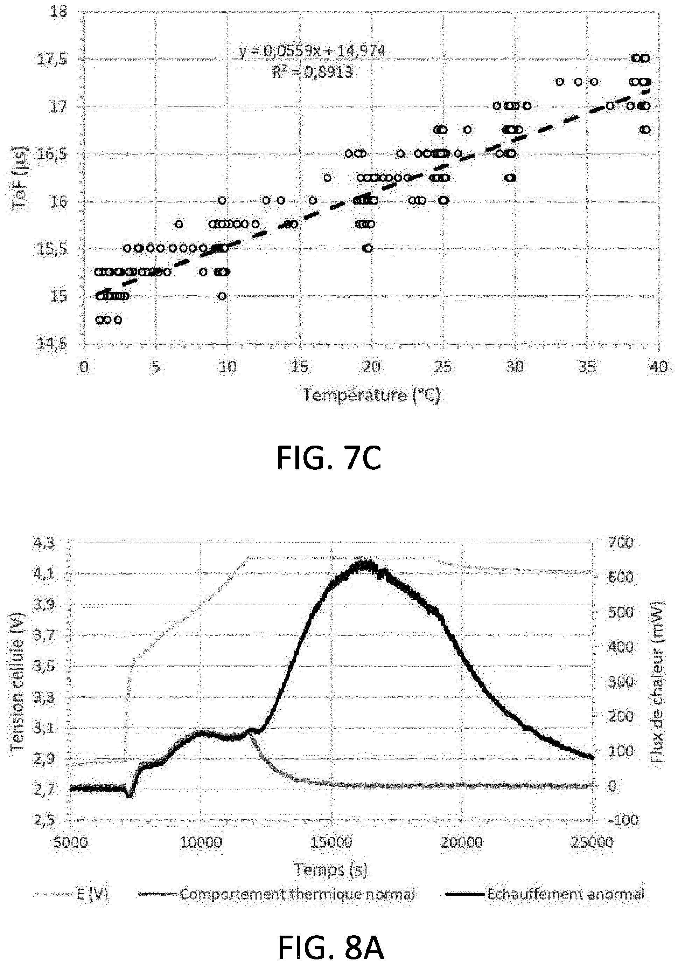

Les figures 7B et 7C montrent, pour la figure 7B le temps de vol (les points de mesure) et la température (la courbe noire) en fonction du temps et pour la figure 7C le temps de vol en fonction de la température (les points représentent les mesures et la ligne pointillée la régression linéaire). De ces deux figures, il est donc possible de confirmer que la température de fonctionnement est fortement corrélée au temps de vol mesuré. Il est donc possible de prendre en compte, dans le procédé selon un premier aspect de l'invention, la température de fonctionnement de la batterie BAT par la mesure du temps de vol. Cette prise en compte de variation de la température interne de la batterie BAT peut être utilisée en complément de mesures par des capteurs de température pour détecter des échauffements locaux inhabituels et de prévenir des risques d'incendie ou d'explosion. Les mesures de température interne permettent en effet une détection beaucoup plus précoce et avec une plus grande précision de l'échauffement qu'avec l'utilisation de capteurs de température placés à la surface des cellules des batteries et ne mesurant qu'une « température de peau ».

Encore un autre exemple de l'influence que peut avoir la température est illustré aux figures 8A à 8D. La figure 8A présente l'évolution de la tension (courbe la plus haute) et du flux de chaleur dégagé au cours de la charge d'une même batterie BAT dans deux cas distincts : tout d'abord, dans le cas d'un fonctionnement où le comportement thermique de la batterie BAT est normal (courbe la plus basse) avec un dégagement de chaleur modéré, culminant à environ 150 mW en fin de charge ; puis dans un cas où (courbe du milieu), dans exactement les mêmes conditions de fonctionnement, le flux de chaleur dégagé par la batterie BAT augmente très fortement de manière anormale pour atteindre 650 mW. Une telle quantité d'énergie dégagée sous forme de chaleur est le signe d'un dysfonctionnement majeur au sein de la batterie BAT, lié à l'apparition de réactions parasites. Les conséquences immédiates peuvent être un endommagement des matériaux, conduisant à une dégradation irréversible des performances ainsi qu'un risque important d'emballement thermique pouvant conduire à une destruction de la batterie BAT ainsi qu'à des problèmes de sécurité (dégagement gazeux, ouverture de l'évent de sécurité, feu, explosion...). Il est donc essentiel de pouvoir détecter un tel dysfonctionnement le plus tôt possible pour procéder aux actions correctives appropriées (limitation du courant, arrêt d'urgence, etc.).

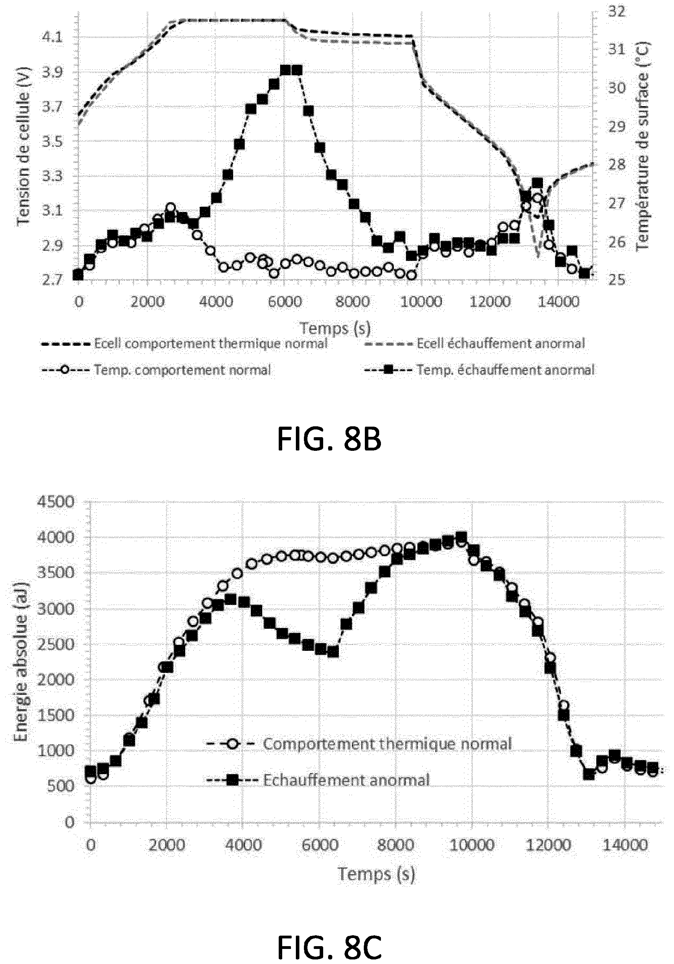

La figure 8B présente l'évolution de la tension aux bornes de la batterie BAT au cours de la charge dans les deux cas (fonctionnement normal et anormal) et illustre le fait que l'évolution de la tension de aux bornes de la batterie BAT ne permet pas de détecter cet échauffement anormal. La figure 8B présente également l'évolution de la température de surface de la batterie BAT dans les deux cas (comportements normal et anormal). Le dégagement de chaleur anormal est bien détecté, mais, dans ce cas précis, ne se traduit par une augmentation que de quelques degrés de la température de surface (5 °C) par rapport au fonctionnement normal. Un tel échauffement peut donc facilement passer inaperçu alors que ses conséquences peuvent être très préjudiciables aux performances ultérieures voire à la sécurité du système.

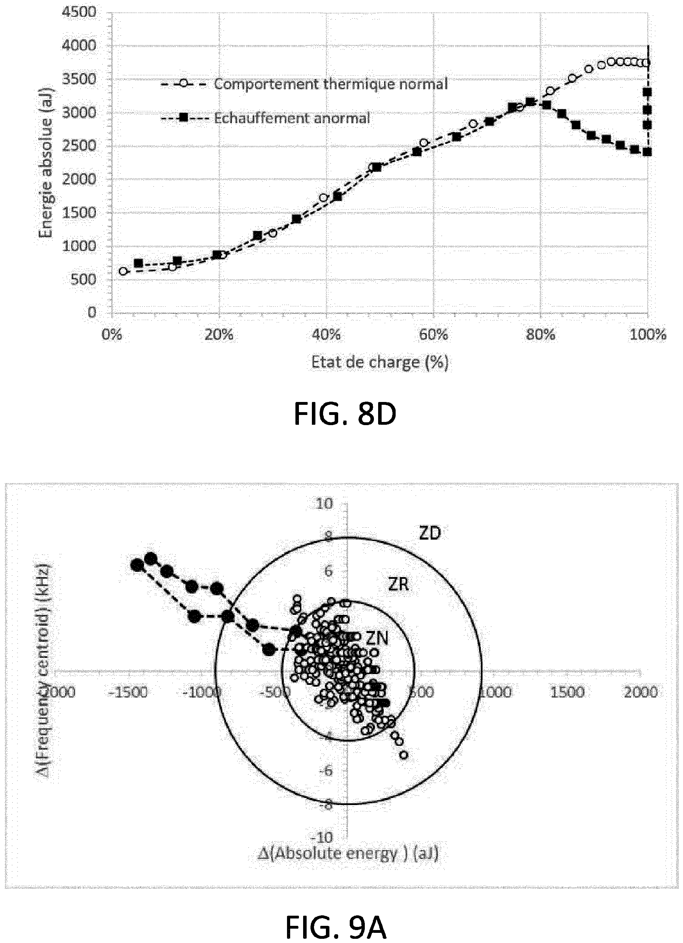

La figure 8C présente l'évolution de l'énergie absolue du signal en fonction du temps pour le comportement normal et anormal et fait apparaitre que le comportement thermique anormal est détectable par la mesure de l'énergie absolue des signaux acoustiques : en effet cette dernière, dans le cas d'un comportement anormal, ne suit plus l'évolution normale, l'énergie absolue des signaux acoustiques diminuant fortement. Comme illustré à la figure 8D, une même mesure de l'énergie absolue peut être faire en fonction de l'état de charge et fait également apparaitre qu'un comportement anormal peut être mis en évidence par une telle mesure.

A partir de ces différentes mesures, il est possible de déterminer une cartographie du fonctionnement de la batterie BAT. La figure 9A présente une cartographie simplifiée (cette dernière ne prenant en compte que deux paramètres) présentant en abscisse l'écart à la fréquence centroïde et en ordonnée l'écart à l'énergie absolue. Chaque point de mesure dans cet espace correspond à un signal acoustique reçu. Les points en blanc correspondent à un fonctionnement dans des conditions normales, les points en noirs correspondent aux signaux acoustiques enregistrés lorsque la batterie BAT présente un dégagement de chaleur anormal pendant son fonctionnement.

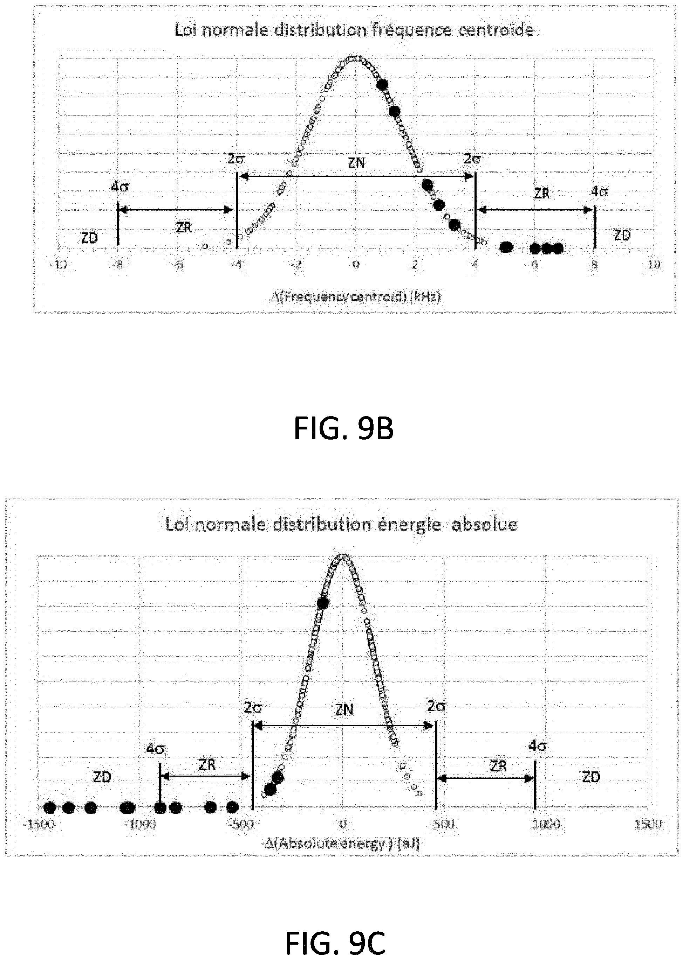

Trois zones de fonctionnement ont été définies dans cet espace : zone de fonctionnement normal ZN, zone de fonctionnement à risque ZR et zone de fonctionnement dangereux ZD. Dans un mode de réalisation, ces trois zones sont définies à partir de la distribution des mesures obtenues pour les paramètres considérés (figure 9B et 9C). Une analyse statistique permet de calculer l'écart type des valeurs mesurées dans des conditions normales de fonctionnement pour chaque paramètre. Ainsi, pour chaque paramètre, la limite entre zone de fonctionnement normal ZN et zone présentant un risque ZR peut être définie à partir des écarts types mesurés. Dans un mode de réalisation, l'écart toléré pour la zone ZN correspond à 2σ (contient statistiquement plus de 95 % des valeurs obtenues en fonctionnement normal) et la limite définie pour la zone à risque peut être calculée à partir d'un écart de 4σ (contenant statistiquement plus de 99,99 % des valeurs obtenues en fonctionnement normal). L'écart toléré pourra bien sûr être adapté en fonction de l'utilisation envisagée. Il apparait clairement sur cette cartographie que les mesures correspondant à un régime anormal (point noir) sortent de la zone de fonctionnement normal ZN pour atteindre la zone de fonctionnement à risque ZR et même la zone de fonctionnement dangereux ZD. Le comportement anormal peut donc être détecté à l'aide d'un procédé 100 selon un premier aspect de l'invention.

Ces différents exemples permettent de montrer comment la prise en compte d'une pluralité de paramètres du signal mesurée permet de détecter une ou plusieurs anomalies (surcharge, échauffement, etc.), là où la mesure d'un paramètre unique (état de charge, tension aux bornes de la batterie BAT, etc.) ne saurait être suffisante.

Dans un mode de réalisation, la cartographie CG comprend un point de référence REF situé dans la zone de fonctionnement normal ZN. De plus, chaque zone est associée à une vitesse limite. La vitesse est positive lorsqu'elle s'éloigne du point de référence REF et négative lorsqu'elle se rapproche du point de référence REF. En outre, chaque cycle de mesure comprend une étape de calcul de la vitesse du point de mesure dans la cartographie CG, cette vitesse étant égale à la distance entre le point de mesure obtenu lors du cycle de mesure précédent et le point de mesure courant (c'est-à-dire correspondant au cycle de mesure en cours) divisée par la période de mesure. Il est utile de noter que chaque signal reçu a un grand nombre de paramètres (fréquences, amplitudes, forces, énergies, durées, temps de vol, etc.), et donc la cartographie CG est effectuée dans un espace de grande dimension dans lequel chaque mesure obtenue lors d'un cycle de mesure est un point dans ledit espace. Il est ainsi possible de comparer les différents points de cet espace, notamment par la mesure de la distance séparant deux points. Cette distance peut par exemple être une distance Euclidienne, Manhattan ou de Minkowski.

Il comprend également une étape de comparaison de la vitesse du point de mesure à la vitesse limite associée à la zone dans laquelle se situe le point de mesure. Il comprend enfin, lorsque la vitesse du point de mesure est supérieure à la vitesse limite associée à la zone dans laquelle se situe le point de mesure, le déclenchement de l'étape 104 de détection d'une anomalie. On notera que la comparaison tient compte du signe de la vitesse. Ainsi, un point de mesure qui a tendance à se rapprocher du point de référence, et donc de la zone de fonctionnement normal ne donnera pas lieu à la détection d'une anomalie pour peu que le point de mesure lui-même ne se situe pas en dehors de la zone de fonctionnement normal ZN.

Dans un mode de réalisation, chaque cycle de mesure comprend une étape 105 de déclenchement d'une alerte lorsqu'une anomalie est détectée. Ainsi, le procédé permet d'identifier lorsque le régime de fonctionnement de la batterie est anormal.

Dans un mode de réalisation, une étape de correction du régiment de fonctionnement de la batterie BAT est déclenchée par l'étape 105 de déclenchement d'une alerte. Ainsi, en plus de prévenir l'utilisateur de la présence d'un problème dans le fonctionnement de la batterie BAT, le système de gestion peut engager une ou plusieurs actions correctives. Les actions correctives comprennent notamment la limitation de la puissance maximale délivrée par la batterie BAT, la réduction de la plage de tension maximale admise aux bornes de la batterie BAT ou bien encore la limitation de la plage de températures acceptables pour la batterie BAT. Dans un mode de réalisation, l'action ou les actions correctives peuvent être effectuées de manière graduelle, de préférence en effectuant un cycle de mesure entre chaque correction afin de mesurer l'effet de ladite correction, de sorte à limiter l'impact de la ou des actions correctrices sur le fonctionnement de la batterie BAT. Dans un mode de réalisation, le procédé 100 comprend, lorsque l'étape de correction ne permet pas de rétablir un régime de fonctionnement normal de la batterie BAT au bout d'un temps prédéterminé (ou après un nombre de cycles de mesure prédéterminé), une étape de passage en mode dégradé ou une étape d'arrêt du système.

Dans un mode de réalisation, une étape de réduction de la période de mesure est déclenchée par l'étape 104 de déclenchement d'une alerte. Ainsi, lorsque la batterie BAT est dans un régime de fonctionnement anormal, le régime de cette dernière est mesurée plus régulièrement de sorte que d'éventuelles actions correctives, le passage en mode dégradé et/ou l'arrêt du système soient déclenchés aussi rapidement que nécessaire. Dans un mode de réalisation, lorsque le régime de fonctionnement de la batterie BAT retourne à la normale, la période de mesure peut être réinitialisée à sa valeur de départ.

Dans un mode de réalisation, chaque point de mesure obtenu au cours de chaque cycle est stocké jusqu'à obtenir un nombre de points de mesure égal à une valeur seuil (par exemple, une valeur seuil supérieure ou égale à 100 de sorte à obtenir une distribution statistique représentative), dit seuil d'adaptation, la position du point de référence REF étant recalculé puis les points de mesure effacés lorsque ledit seuil est atteint. Le stockage de ces points de mesure peut se faire dans la mémoire du moyen de calcul MC, la partie de la mémoire ainsi occupée étant libérée lorsque la position du point de référence REF est recalculée. De préférence, la position du nouveau point de référence REF correspond au barycentre des points de mesures stockés. Ceci permet de modifier la position du point de référence REF au cours de la vie de la batterie BAT et donc de prendre en compte son vieillissement. On notera que le changement de position du point de référence fait également évoluer les trois zones de fonctionnement décrites auparavant.

Afin de mettre en oeuvre un procédé 100 selon un premier aspect de l'invention, un deuxième aspect de l'invention concerne un système de gestion d'une batterie BAT. Le système de gestion de batterie BAT peut comprendre des moyens pour contrôler et mesurer les grandeurs physiques de référence de la batterie BAT telles que le courant délivré par ladite batterie BAT ou la tension aux bornes de ladite batterie BAT. Ces moyens de contrôle peuvent notamment être utilisés afin de corriger le régime de fonctionnement de la batterie BAT si une telle correction est nécessaire. De plus, le système de gestion de la batterie BAT comprend un émetteur acoustique EA configuré pour être fixé sur une paroi de la batterie BAT. L'émetteur acoustique EA est de préférence un émetteur acoustique EA piézoélectrique et ce dernier est fixé à une paroi de la batterie BAT au moyen d'une colle ou de tout autre moyen de fixation. Le système de gestion de la batterie BAT comprend également un récepteur acoustique RA configuré pour être fixé sur une paroi de la batterie BAT. De même qu'avec l'émetteur acoustique EA, le récepteur acoustique RA est de préférence un récepteur acoustique RA piézoélectrique et ce dernier est fixé à une paroi de la batterie BAT au moyen d'une colle ou de tout autre moyen de fixation. Par exemple, l'émetteur/récepteur acoustique EA/RA peut être à base de PVDF (Polymère Polyfluore de Vinylidène), dispositif qui présente généralement des bandes de fréquences de résonance larges comprises entre le kHz et le MHz. De manière alternative, l'émetteur/récepteur acoustique EA/RA peut être à base de PZT (titano-zirconate de plomb), dispositif qui présente généralement des bandes de fréquences de résonance étroites comprises entre 10 kHz et quelques centaines de kHz. De préférence, la paroi sur laquelle est fixé l'émetteur acoustique EA et opposée à la paroi sur laquelle est fixé le récepteur acoustique RA. Le système de gestion comprend également un moyen de calcul MC connecté à l'émetteur acoustique EA et au récepteur acoustique RA. Le moyen de calcul MC peut prendre la forme d'un processeur associé à une mémoire, d'une carte ASIC ou bien encore un FPGA. La connexion du moyen de calcul MC avec l'émetteur acoustique et le récepteur acoustique peut se faire au moyen d'un bus, d'une connexion de type Ethernet^{®}, ou bien encore au moyen d'une connexion dans fils, par exemple Bluetooth^{®}. Le moyen de calcul MC comporte également une mémoire dans laquelle une cartographie CG est stockée. Cette cartographie CG définit une première zone de fonctionnement dite zone de fonctionnement normal ZN, une deuxième zone de fonctionnement dite zone de fonctionnement à risque ZR et une troisième zone de fonctionnement dite zone de fonctionnement dangereux ZD.

En outre, l'émetteur acoustique EA est configuré pour émettre sur instruction du moyen de calcul MC un signal acoustique par l'émetteur acoustique. De préférence, le signal acoustique comporte une pluralité de fréquences comprises entre 1 kHz et 1 MHz, de préférence entre 100 kHz et 200 kHz. De préférence, le signa acoustique a une durée comprise entre 0,2 et 1 ms. De plus, le récepteur acoustique RA est configuré pour réceptionner le signal acoustique et pour transmettre ledit signal au moyen de calcul MC. Enfin, le moyen de calcul MC est configuré déterminer la zone de fonctionnement dans quelle se situe le point de mesure et, lorsque le point de mesure se situe dans la zone fonctionnement à risque ZR ou la zone de fonctionnement dangereux ZD, détecter une anomalie.

## Revendications

1. Procédé (100) de détection d'une anomalie dans le fonctionnement d'une batterie (BAT) à l'aide d'un système de gestion de batterie (BAT), ledit système comprenant un émetteur acoustique (EA) configuré pour être fixé sur une paroi de la batterie (BAT), un récepteur acoustique (RA) configuré pour être fixé sur une paroi de la batterie (BAT) , ledit récepteur acoustique étant fixé sur une paroi de la batterie lors de la mise en oeuvre du procédé, et un moyen de calcul (MC) connecté à l'émetteur acoustique (EA) et au récepteur acoustique (RA), une cartographie (CG) définissant une première zone de fonctionnement dite zone de fonctionnement normal (ZN), une deuxième zone de fonctionnement dite zone de fonctionnement à risque (ZR) et une troisième zone de fonctionnement dite zone de fonctionnement dangereux (ZD), ladite cartographie étant déterminée à partir des signaux acoustiques réceptionnés dans les différentes conditions d'opération de la batterie, ledit procédé (100) comprenant au moins un premier cycle de mesure, chaque cycle de mesure étant séparé du cycle de mesure précédent par une période dite période de mesure, chaque cycle de mesure comportant :
- une étape (101) d'émission d'un signal acoustique par l'émetteur acoustique (EA) sur instruction du moyen de calcul (MC) ;
- une étape (102) de réception d'un signal acoustique par le récepteur acoustique (RA), le signal reçu étant transmis au moyen de calcul (MC) de sorte à obtenir un point de mesure dans la cartographie (CG) ;
- une étape (103) de détermination de la zone de fonctionnement dans laquelle se situe le point de mesure ;
- lorsque le point de mesure se situe dans la zone fonctionnement à risque (ZR) ou dans la zone de fonctionnement dangereux (ZD), une étape (104) de détection d'une anomalie.

2. Procédé (100) selon la revendication précédente dans lequel la cartographie comprend un point de référence situé dans la zone de fonctionnement normal (ZN), chaque zone est associée à une vitesse limite, une vitesse étant positive lorsqu'elle s'éloigne du point de référence (REF) et négative lorsqu'elle se rapproche du point de référence (REF), chaque cycle de mesure comprenant :
- une étape de calcul de la vitesse du point de mesure dans la cartographie, cette vitesse étant égale à la distance entre le point de mesure obtenu lors du cycle de mesure précédent et le point de mesure courant divisée par la période de mesure ;
- une étape de comparaison de la vitesse du point de mesure à la vitesse limite associée à la zone de fonctionnement dans laquelle se situe le point de mesure ;
- lorsque la vitesse du point de mesure est supérieure à la vitesse limite associée à la zone de fonctionnement dans laquelle se situe le deuxième point de mesure, le déclenchement de l'étape (104) de détection d'une anomalie.

3. Procédé (100) selon l'une des revendications précédentes dans lequel, chaque cycle de mesure comprend, lorsqu'une anomalie est détectée, une étape (105) de déclenchement d'une alerte.

4. Procédé (100) selon l'une des revendications précédentes dans lequel chaque cycle comprend, lorsqu'une anomalie est détectée, une étape de correction du régime de fonctionnement de la batterie (BAT).

5. Procédé (100) selon la revendication précédente comprenant, lorsque l'étape de correction ne permet pas de rétablir un régime de fonctionnement normal de la batterie (BAT) au bout d'un temps prédéterminé, une étape de passage en mode dégradé ou une étape d'arrêt du système.

6. Procédé (100) selon l'une des trois revendications précédentes dans lequel une étape de réduction de la période de mesure est déclenchée par l'étape (104) de déclenchement d'une alerte.

7. Procédé (100) selon l'une des revendications précédentes et la revendication 2 dans lequel chaque point de mesure obtenu au cours de chaque cycle est stocké jusqu'à obtenir un nombre de points de mesure égale à une valeur seuil, dit seuil d'adaptation, la position du point de référence (REF) étant recalculé puis les points de mesure effacés lorsque ledit seuil est atteint.

8. Système de gestion d'une batterie comprenant un émetteur acoustique (EA) configuré pour être fixé sur une paroi d'une batterie (BAT), un récepteur acoustique (RA) configuré pour être fixé sur une paroi de la batterie (BAT) et un moyen de calcul (MC) connecté à l'émetteur acoustique (EA) et au récepteur acoustique (RA), le système de gestion comprenant des moyens adaptés pour exécuter les étapes du procédé (100) selon l'une des revendications précédentes.

9. Programme d'ordinateur comprenant des instructions qui conduisent le système de gestion selon la revendication précédente à exécuter les étapes du procédé (100) selon l'une des revendications 1 à 7.

10. Support lisible par ordinateur, sur lequel est enregistré le programme d'ordinateur selon la revendication 9.

## Patentansprüche

1. Verfahren (100) zum Erkennen einer Anomalie der Funktion einer Batterie (BAT) mithilfe eines Batteriemanagementsystems (BAT), wobei das System einen akustischen Sender (EA), der so ausgelegt ist, dass er an einer Wand der Batterie (BAT) befestigt werden kann, einen akustischen Empfänger (RA), der so ausgelegt ist, dass er bei der Ausführung des Verfahrens an einer Wand der Batterie (BAT) befestigt wird, und ein Berechnungsmittel (MC), das mit dem akustischen Sender (EA) und dem akustischen Empfänger (RA) verbunden ist, umfasst, wobei eine Kartografie (CG), die einen ersten Funktionsbereich, der als normaler Funktionsbereich (ZN) bezeichnet wird, einen zweiten Funktionsbereich, der als riskanter Funktionsbereich (ZR) bezeichnet wird, und einen dritten Funktionsbereich, der als gefährlicher Funktionsbereich (ZD) bezeichnet wird, definiert, wobei die Kartografie anhand der akustischen Signale bestimmt wird, die unter den verschiedenen Betriebsbedingungen der Batterie empfangen werden, wobei das Verfahren (100) mindestens einen ersten Messzyklus umfasst, wobei jeder Messzyklus vom vorherigen Messzyklus durch eine Periode, die als Messperiode bezeichnet wird, getrennt ist und jeder Messzyklus beinhaltet:
- einen Schritt (101) des Sendens eines akustischen Signals durch den akustischen Sender (EA) auf Anweisung des Berechnungsmittels (MC);
- einen Schritt (102) des Empfangens eines akustischen Signals durch den akustischen Empfänger (RA), wobei das empfangene Signal an das Berechnungsmittel (MC) weitergeleitet wird, um einen Messpunkt in der Kartografie (CG) zu erhalten;
- einen Schritt (103) zur Bestimmung des Funktionsbereichs, in dem sich der Messpunkt befindet;
- wenn sich der Messpunkt in dem riskanten Funktionsbereich (ZR) oder in dem gefährlichen Funktionsbereich (ZD) befindet, einen Schritt (104) des Erkennens einer Anomalie.

2. Verfahren (100) nach dem vorhergehenden Anspruch, in dem die Kartografie einen Referenzpunkt umfasst, der sich im normalen Funktionsbereich (ZN) befindet, wobei jeder Bereich einer Grenzgeschwindigkeit zugeordnet ist, wobei eine Geschwindigkeit positiv ist, wenn sie sich vom Referenzpunkt (REF) entfernt, und negativ, wenn sie sich dem Referenzpunkt (REF) nähert, wobei jeder Messzyklus Folgendes umfasst:
- einen Schritt zur Berechnung der Geschwindigkeit des Messpunktes in der Kartografie, wobei diese Geschwindigkeit gleich dem Abstand zwischen dem beim vorherigen Messzyklus erhaltenen Messpunkt und dem aktuellen Messpunkt geteilt durch die Messperiode ist;
- einen Schritt des Vergleichens der Geschwindigkeit des Messpunkts mit der Grenzgeschwindigkeit, die dem Funktionsbereich zugeordnet ist, in dem sich der Messpunkt befindet;
- wenn die Geschwindigkeit des Messpunkts höher ist als die Grenzgeschwindigkeit, die dem Funktionsbereich zugeordnet ist, in dem sich der zweite Messpunkt befindet, Auslösen des Schritts (104) des Erkennens einer Anomalie.

3. Verfahren (100) nach einem der vorhergehenden Ansprüche, in dem jeder Messzyklus, wenn eine Anomalie festgestellt wird, einen Schritt (105) zum Auslösen eines Alarms umfasst.

4. Verfahren (100) nach einem der vorhergehenden Ansprüche, in dem jeder Zyklus, wenn eine Anomalie festgestellt wird, einen Schritt zur Korrektur der Betriebsbedingungen der Batterie **(BAT)** umfasst.

5. Verfahren (100) nach dem vorhergehenden Anspruch, das, wenn der Korrekturschritt nach einer vorbestimmten Zeit nicht zur Wiederherstellung normaler Betriebsbedingungen der Batterie **(BAT)** führt, einen Schritt zum Übergang in einen verschlechterten Modus oder einen Schritt zum Ausschalten des Systems umfasst.

6. Verfahren (100) nach einem der drei vorhergehenden Ansprüche, in dem ein Schritt zum Verkürzen der Messperiode durch den Schritt (104) zum Auslösen eines Alarms ausgelöst wird.

7. Verfahren (100) nach einem der vorhergehenden Ansprüche und Anspruch 2, in dem jeder im Laufe jedes Zyklus erhaltene Messpunkt gespeichert wird, bis eine Anzahl von Messpunkten erhalten wird, die gleich einem Grenzwert ist, der als Anpassungsgrenze bezeichnet wird, wobei die Position des Referenzpunkts (REF) neu berechnet und dann die Messpunkte gelöscht werden, wenn die Grenze erreicht ist.

8. Batteriemanagementsystem mit einem akustischen Sender (EA), der so ausgelegt ist, dass er an einer Wand einer Batterie (BAT) befestigt werden kann, einem akustischen Empfänger (RA), der so ausgelegt ist, dass er an einer Wand der Batterie (BAT) befestigt werden kann, und einem Berechnungsmittel (MC), das mit dem akustischen Sender (EA) und dem akustischen Empfänger (RA) verbunden ist, wobei das Managementsystem eine Einrichtung umfasst, die geeignet ist, die Schritte des Verfahrens (100) gemäß einem der vorhergehenden Ansprüche auszuführen.

9. Computerprogramm mit Anweisungen, die das Managementsystem nach dem vorhergehenden Anspruch dazu veranlassen, die Schritte des Verfahrens (100) nach einem der Ansprüche 1 bis 7 auszuführen.

10. Computerlesbarer Datenträger, auf dem das Computerprogramm nach Anspruch 9 gespeichert ist.

## Claims

1. Method (100) for detecting an anomaly in the operation of a battery (BAT) using a battery management system (BAT), said system comprising an acoustic emitter (EA) configured to be attached to a wall of the battery (BAT), an acoustic receiver (RA) configured to be attached to a wall of the battery (BAT), said acoustic receiver being attached to a wall of the battery during the implementation of the method, and a calculating means (MC) connected to the acoustic emitter (EA) and to the acoustic receiver (RA), a mapping (CG) defining a first operating region termed the normal operating region (ZN), a second operating region termed the at-risk operating region (ZR) and a third operating region termed the dangerous operating region (ZD), said cartography being determined from the acoustic signals received according to the different operating conditions of the battery, said method (100) comprising at least a first measurement cycle, each measurement cycle being separated from the preceding measurement cycle by a period termed the measurement period, each measurement cycle comprising:
- a step (101) of emitting an acoustic signal by the acoustic emitter (EA) on instruction from the calculating means (MC);
- a step (102) of receiving an acoustic signal by the acoustic receiver (RA), the received signal being transmitted to the calculating means (MC) so as to obtain a measurement point in the mapping (CG);
- a step (103) of determining the operating region in which the measurement point is located;
- when the measurement point is located in the at-risk operating region (ZR) or in the dangerous operating region (ZD), a step (104) of detecting an anomaly.

2. Method (100) according to the preceding claim wherein the mapping comprises a reference point located in the normal operating region (ZN), each region is associated with a speed limit, a speed being positive when it is moving away from the reference point (REF) and negative when it is approaching the reference point (REF), each measurement cycle comprising:
- a step of calculating the speed of the measurement point in the mapping, this speed being equal to the distance between the measurement point obtained during the preceding measurement cycle and the current measurement point divided by the measurement period;
- a step of comparing the speed of the measurement point with the speed limit associated with the operating region in which the measurement point is located;
- when the speed of the measurement point is greater than the speed limit associated with the operating region in which the second measurement point is located, the triggering of the step (104) of detecting an anomaly.

3. Method (100) according to one of the preceding claims wherein, each measurement cycle comprises, when an anomaly is detected, a step (105) of triggering an alert.

4. Method (100) according to one of the preceding claims wherein each cycle comprises, when an anomaly is detected , a step of correcting the operating regime of the battery (BAT).

5. Method (100) according to the preceding claim comprising, when the step of correcting does not make it possible to re-establish a normal operating regime of the battery (BAT) after a predetermined amount of time, a step of switching to degraded mode or a step of stopping the system.

6. Method (100) according to one of the three preceding claims wherein a step of reducing the measurement period is triggered by the step (104) of triggering an alert.

7. Method (100) according to one of the preceding claims and claim 2 wherein each measurement point obtained during each cycle is stored until a number of measurement points is obtained equal to a threshold value, termed adaptation threshold, the position of the reference point (REF) being recalculated then the measurement points erased when said threshold is reached.

8. Battery management system comprising an acoustic emitter (EA) configured to be attached to a wall of a battery (BAT), an acoustic receiver (RA) configured to be attached to a wall of the battery (BAT), and a calculating means (MC) connected to the acoustic emitter (EA) and to the acoustic receiver (RA), the management system comprising means adapted for executing the steps of the method (100) according to one of the preceding claims.

9. Computer program comprising instructions that lead the management system according to the preceding claim to execute the steps of the method (100) according to one of claims 1 to 7.

10. Support that can be read by a computer, wherein the computer program is recorded according to claim 9.
